# EUROPEAN PATENT APPLICATION

(11) **EP 4 516 758 A1**
(43) Date of publication of application: **05.03.2025**
(21) Application number: 23194523.9
(22) Date of filing: 31.08.2023
(51) Int. Cl.: C04B 24/12, C04B 28/04, C04B 40/00

(54) **ADMIXTURE FOR CEMENTITIOUS COMPOSITION COMPRISING ALKANOLAMINE N-OXIDE AND CEMENTITIOUS COMPOSITIONS COMPRISING THE SAME**

(71) Applicant: Sika Technology AG, 6340 Baar (CH)
(72) Inventor: CHAPELAT, Julien, 2502 Bienne (CH); CEREDA, Cristiano, 24010 Bonate Sopra (IT); GALLUCCI, Emmanuel, 8048 Zürich (CH)
(74) Representative: Sika Patent Attorneys

(57) **Abstract**

The present invention relates to admixtures comprising alkanolamine N-oxides useful for the increase of strength of cementitious compositions. The present invention also relates to cementitious compositions comprising alkanolamine N-oxides and having increased strength when cured.

## Description

### Technical Field

The present invention relates to admixtures and methods to increase the strength of cementitious compositions. The present invention also relates to cementitious compositions having increased strength.

### Background of the invention

Cementitious compositions, such as hydraulic cement, mortars, or concrete develop strength when reacted with water. In many applications it is important to accelerate the development of strength. It is often especially desirable that cementitious compositions acquire a high compressive strength within short time after mixing with water. For example, a fast development of strength allows for early release of a building made from cementitious composition for further works and/or use.

Many accelerators are known that can accelerate the setting and/or curing of cementitious compositions and thus increase their strength at early age and/or when fully cured. An overview of accelerators for concrete is for example provided in the SINTEF REPORT "Accelerating admixtures for concrete" (SBF BKA07025) by Roar Myrdal.

Strength improving admixtures for cementitious compositions based on amines and in particularly alkanolamines are also known. A variety of amines useful as strength improving admixtures is for example disclosed in US 2009/0292041.

Many known accelerators for cementitious compositions have drawbacks. For example, they may be difficult to source or pose problems of product safety.

Additionally, with the increasing use of blended cements there is an additional demand for new accelerating admixtures.

There is thus a continued need in the industry for admixtures suitable to accelerate the setting and/or curing of cementitious compositions and especially to increase the strength of cementitious compositions.

### Summary of the invention

It is an objective of the present invention to provide admixtures for cementitious compositions that can increase the strength of cementitious compositions at a given age. In particular admixtures improve the compressive strength at early age and/or late age, especially at 1d, 7d, and/or 28 d of curing of a cementitious composition. It is another objective of the present invention to provide cementitious compositions with increased strength, especially increased compressive strength when cured.

It has surprisingly been found that the use of alkanolamine N-oxides increases the strength, especially the compressive strength of cementitious compositions.

The objective of the present invention is therefore solved by an admixture as claimed in claim 1.

Further aspects of the invention are the subject of independent claims. Preferred embodiments are the subject of dependent claims.

### Ways for carrying out the invention

In a first aspect the present invention relates to an admixture for cementitious compositions comprising at least one alkanolamine N-oxide.

A cementitious composition of the present invention is a composition comprising at least one cementitious binder. A cementitious composition of the present invention may also consist of a cementitious binder or of a mix of two or more different cementitious binders. A cementitious composition may additionally comprise aggregates, fillers, admixtures different from the admixture of the present invention, and/or water. A cementitious composition reacts with water to from solid hydrates. Thus, curing of a cementitious composition starts when mixing water is added. Especially, a cementitious composition of the present invention is a cementitious binder, a mortar, or concrete.

A cementitious binder within the present context is a mineral material that reacts with water to form solid hydrates. A cementitious binder in particular is selected from cements, especially from Portland cements according to standard EN 197-1. A cementitious binder may also be selected from calcium aluminate cements, especially according to standard EN 14647, calcium sulfoaluminate cements, lime, pozzolanes, and latent hydraulic materials. Mixtures of two or more cementitious binders are possible and sometimes preferred.

The term "lime" is meant to encompass natural hydraulic lime, formulated lime, hydraulic lime, and air lime as described in the standard EN 459-1:2015. Pozzolanes and latent hydraulic materials preferably are selected from the group consisting of slag, clay, calcined clay, especially metakaolin, kiln dust, microsilica, fly ash, pyrogenic silica, precipitated silica, silica fume, zeolite, rice husk ash, burnt oil shale, and natural pozzolanes such as pumice or trass. A cementitious binder may additionally comprise calcium sulfate, in particular calcium sulfate anhydrite, calcium sulfate α- and β- hemihydrate, calcium sulfate dihydrate, naturally occurring gypsum, as well as gypsum from industrial processes such as FGD gypsum or phosphogypsum.

An alkanolamine N-oxide within the present context can be a compound of the general structural formula (I) 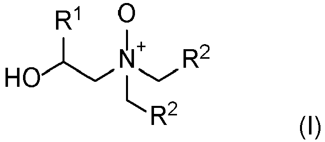 where
R¹ independently of one another are H, C₁-C₁₈ alkyl, C₃-C₆ cycloalkyl, C₅-C₁₀ aryl, C₆-C₂₀ aralkyl, each of which can be unsaturated and/or can be substituted with one or more oxygen atoms,
R² is H or -CH(R¹)-OH, with R¹ having the meaning as described before.

Very preferably, in general structural formula (I), R¹ independently of one another is H or CH₃ and R² are -CH(R¹)-OH.

An alkanolamine N-oxide within the present context can be a compound of the general structural formula (II) 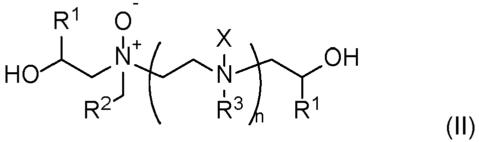 where
R¹ independently of one another are H, C₁-C₁₈ alkyl, C₃-C₆ cycloalkyl, C₅-C₁₀ aryl, C₆-C₂₀ aralkyl, each of which can be unsaturated and/or can be substituted with one or more oxygen atoms,
R² is H or -CH(R¹)-OH, with R¹ having the meaning as described before,
R³ independently of one another are H, C₁-C₁₈ alkyl, C₃-C₆ cycloalkyl, C₅-C₁₀ aryl, C₆-C₂₀ aralkyl, or -CH₂-R²,
n = 1 - 100, preferably 2 - 25, and
X = a free electron pair or O⁻, whereby when X is O⁻ the nitrogen atom to which it is attached bears a positive charge.

Very preferably, in general structural formula (II), R¹ independently of one another is H or CH₃, R² are -CH(R¹)-OH, R³ are -CH₂-R², X is a free electron pair, and n = 1.

Particularly preferred alkanolamine N-oxides are selected from triethanolamine N-oxide, triisopropanolamine N-oxide, N-methyldiethanolamine N-oxide, N-methyldiisopropanolamine N-oxide, diethanolisopropanolamine N-oxide, ethanoldiisopronanolamine N-oxide, N,N,N',N'-tetrakis(2-hydroxyethyl)ethylenediamine N-oxide, N,N,N',N'-tetrakis(2-hydroxyethyl)ethylenediamine bis N-oxide, or mixtures thereof.

Particularly preferred alkanolamine N-oxides are selected from chemicals of one or more of the following structural formulae:

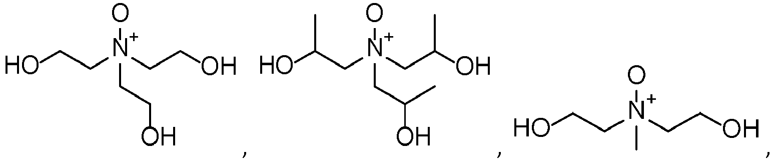

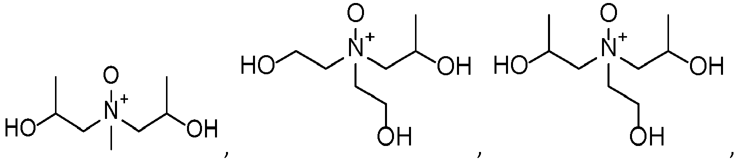

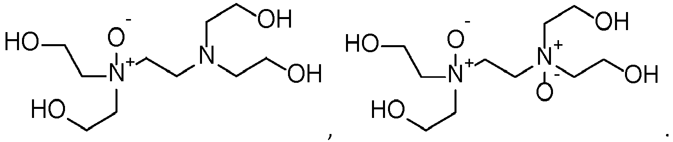

Alkanolamine N-oxides can be prepared from the corresponding alkanolamines by an oxidation reaction. Preferably, hydrogen peroxide or peracids, such as *meta-*chloroperoxybenzoic acid, are used as oxidants.

It is possible, and in certain cases preferred, that the admixture essentially consists of an alkanolamine N-oxide or mixture of alkanolamine N-oxides. In such cases, especially, the alkanolamine N-oxide does not contain any alkanolamine. Alkanolamine in this sense is a substance with nitrogen in the oxidation state -III.

It is likewise possible that the admixture comprises an alkanolamine N-oxide or mixture of alkanolamine N-oxides and additionally comprises further chemicals. According to some embodiments, the admixture of the present invention additionally comprises at least one of solvents, especially water, retarders, accelerators, air detraining agents, air entraining agents, shrinkage reducing admixtures, water reducers, superplasticizers, viscosity modifiers, thickening agents, foaming agents, water retention agents, damp proofing agents, pumping aids, biocides, corrosion inhibitors, grinding aids, especially glycols or glycerol, and pigments. It is also possible that an admixture of the present inventions comprises alkanolamines.

According to preferred embodiments, an admixture of the present invention comprises at least one alkanolamine N-oxide and additionally comprises at least one alkanolamine. Especially, an admixture of the present invention comprises an alkanolamine N-oxide and an alkanolamine, whereby the alkanolamine N-oxide present is derived by oxidation from the alkanolamine present. In other words, preferably, the admixture of the present invention comprises the alkanolamine N-oxide which is the compound derived by oxidation from the additionally present alkanolamine.

For example, a preferred admixture of the present invention comprises triethanolamine N-oxide and triethanolamine. Another preferred admixture of the present invention comprises triisopropanolamine N-oxide and triisopropanolamine. Another preferred admixture of the present invention comprises N-methyldiethanolamine N-oxide and N-methyldiethanolamine. Another preferred admixture of the present invention comprises N-methyldiisopropanolamine N-oxide and N-methyldiisopropanolamine. Another preferred admixture of the present invention comprises diethanolisopropanolamine N-oxide and diethanolisopropanolamine. Another preferred admixture of the present invention comprises ethanoldiisopronanolamine N-oxide and ethanoldiisopronanolamine. Another preferred admixture of the present invention comprises N,N,N',N'-tetrakis(2-hydroxyethyl)ethylenediamine N-oxide, N,N,N',N'-tetrakis(2-hydroxyethyl)ethylenediamine bis N-oxide, and N,N,N',N'-tetrakis(2-hydroxyethyl)ethylenediamine.

According to embodiments, the admixture of the present invention comprises an alkanolamine N-oxide and an alkanolamine in a molar ratio of the alkanolamine N-oxide to the alkanolamine between 10:1 to 1:10, preferably 6:1 to 1:3, more preferably 3:1 to 1:1. It has been found that particular high increase in compressive strength of cementitious compositions can be achieved when such admixtures are used.

In another aspect, the present invention relates to a method for the manufacture of a cementitious composition, said method comprising the steps of
(i) providing at least one constituent of a cementitious composition,
(ii) providing an admixture comprising at least one alkanolamine N-oxide,
(iii) adding said admixture to said at least one constituent of a cementitious composition.

All features and embodiments described above also apply to this aspect.

A cementitious composition can be a cementitious binder, a mortar, or concrete.

For example, in step (i), there is provided at least one of a cementitious binder, aggregates, fillers, and/or admixtures different from the admixture of the present invention. It is possible, that a cementitious composition which is already a mix of constituents is provided in step (i). Such cementitious composition may for example be a dry mortar. It is possible and sometimes preferred that no water is present in step (i).

Preferably, a cementitious binder is a Portland cement according to standard EN 197-1:2011. Portland cement according to other standards, such as ASTM C150/C150M, or suitable Chinese or Japanese standards, is also suitable.

A cementitious composition can also comprise a cement or cementitious binder, and additionally comprise aggregates, optionally fillers, optionally admixtures different from the admixture of the present invention, and optionally water.

Aggregates can be any material that is non-reactive in the hydration reaction of cementitious binders. Aggregates can be any aggregate typically used for construction materials. Typical aggregates are for example rock, crushed stone, crushed concrete, gravel, sand, especially quartz sand, river sand and/or manufactured sand, glass, expanded glass, hollow glass beads, glass ceramics, quarry wastes, porcelain, electro fused or sintered abrasives, firing support, silica xerogels, biosourced aggregates such as hemp or sunflower.

Fillers are characterized by a small particle size, in particular a particle size of below 0.063 mm. Especially, fillers are selected from fine calcium carbonate, ground limestone, ground dolomite, ground aluminum oxide, and/or non-reactive slags. Non-reactive means that slags useful as fillers do not react with water in hydration reactions.

For a cementitious composition of the present invention to develop strength, it is necessary to add mixing water. Mixing water may be present in the cementitious composition in step (i) and/or can be added in an extra step.

In particular, the cementitious composition manufactured by said method has the advantage of an increased strength at a given age.

The term "increased strength at a given age" means that the strength, especially the compressive strength, of a cementitious composition manufactured by a method of the invention is higher after curing said composition for a given time, for example 1 day, 7 days, or 28 days. Curing starts when water is added to the cementitious composition. Comparison is made to the same cementitious composition cured for the same time, but not comprising the at least one alkanolamine N-oxide. The compressive strength can be measured according to standard EN 196-1.

It is preferred that the admixture comprising at least one alkanolamine N-oxide is added in an amount such that the cementitious composition comprises the at least one alkanolamine N-oxide in an amount of between 100 - 2000 ppm, preferably 200 - 800 ppm, especially 300 - 400 ppm, relative to the total weight of the cementitious binder present.

It is possible, that a method of the present invention comprises a step of adding mixing water to the cementitious composition. It is in particular possible to add the admixture of the present invention together with any mixing water.

Preferably, in step (iii) of a method of the present invention, the admixture is added to the at least one constituent of a cementitious composition together with any mixing water.

The total amount of water added to a cementitious composition can be such that a weight ratio of water to cementitious binder of 0.1 - 0.8, preferably 0.2 - 0.6, especially, 0.3 - 0.5 results.

It is also possible to add the admixture to the cementitious composition in the dry form. Thereby, the admixture, either in dry form or in liquid form, is added to other dry constituents of the cementitious composition. This is in particular possible where the cementitious composition is a dry mortar.

Step (iii) of a method for the manufacture of a cementitious composition may include the intermixing of the admixture with the cementitious composition. Typically, a step of intermixing is included in step (iii) or is a separate step of the inventive method. Methods and means for intermixing of solids and liquids are not particularly limited and are known to the skilled person per se.

In a further aspect the present invention relates to a method for the modification of cement, in particular Portland cement, comprising the steps of
(i) providing a constituent of cement, preferably providing Portland cement clinker,
(ii) providing an admixture comprising at least one alkanolamine N-oxide,
(iii) intergrinding said admixture with said constituent of cement.

All features and embodiments described above also apply to this aspect.

Cement clinker is a solid material produced in the manufacture of cement as an intermediary product. Cement clinker occurs in particular as lumps and/or nodules. Typically, clinker particles have a size of a few millimetres up to 25 millimetres in diameter. However, other sizes are possible as well. Cement clinker is produced by sintering raw materials for cement, such as limestone and aluminosilicates, especially in a cement kiln.

Cement is manufactured from cement clinker by milling or grinding. It is possible that calcium sulfate and/or supplementary cementitious materials are added to cement clinker before an/or during the grinding and/or are mixed with ground cement clinker to form a cement.

When compared to cement clinker, cement is a much finer product. Usually, cement is obtained by grinding cement clinker, optionally with further constituents of a cementitious binder, in a cement mill. Typically, cements have a Blaine surface of at least 1'000 cm²/g, for example from 3'000 - 5'000 cm²/g. Nevertheless, cements with other Blaine surfaces are known as well.

Constituents of cement clinker especially can be selected from Portland cement clinker, calcium aluminate cement clinker, calcium sulfoaluminate cement clinker, limestone, slag, clay, calcined clay, especially metakaolin, kiln dust, microsilica, fly ash, pyrogenic silica, precipitated silica, silica fume, zeolite, rice husk ash, burnt oil shale, and natural pozzolanes such as pumice or trass, calcium sulfate, in particular calcium sulfate anhydrite, calcium sulfate α- and β- hemihydrate, calcium sulfate dihydrate, naturally occurring gypsum, as well as gypsum from industrial processes such as FGD gypsum or phosphogypsum. Preferably, constituents of cement are selected from Portland cement clinker, limestone, blast furnace slag, silica fume, fly ash, burnt oil shale, natural pozzolanes, calcined clays, and/or gypsum.

The term "intergrinding" stands for a process where said admixture is co-milled with said constituent of cement clinker. The admixture is added to the constituent of cement clinker before and/or during the grinding thereof.

The method for the modification of cement can be practiced on attrition mills. Especially suitable attrition mills are semi-autogeneous mills and compressive grinders.

A compressive grinder within the present context is a type of grinder able to exert a compressive force on a bed of material to be ground. Preferably, the compressive force is exerted by rotating cylinders or a rotor-stator. A compressive grinder can for example be a crusher or a roller mill. According to embodiments, the compressive grinder is a vertical roller mill, a horizontal roller mill, or jar crusher with controllable, adjustable compression. According to embodiments, in a method of the present invention, the intergrinding is done in a vertical roller mill or a horizontal roller mill.

A semi-autogeneous mill is for example a ball mill or an agitation mill. According to embodiments, in a method of the present invention, the intergrinding is done in a ball mill or in an agitation mill.

It is preferred that the admixture comprising at least one alkanolamine N-oxide is interground with the constituent of cement clinker in an amount such that the constituent of cement clinker comprises the at least one alkanolamine N-oxide in an amount of between 100 - 2000 ppm, preferably 200 - 800 ppm, especially 300 - 400 ppm, relative to the total weight of the constituent of cement clinker.

In another aspect the present invention relates to a cementitious composition comprising
a) at least one cementitious binder, preferably Portland cement,
b) at least one alkanolamine N-oxide, preferably selected from triethanolamine N-oxide, triisopropanolamine N-oxide, N-methyldiethanolamine N-oxide, N-methyldiisopropanolamine N-oxide diethanolisopropanolamine N-oxide, ethanoldiisopronanolamine N-oxide, N,N,N',N'-tetrakis(2-hydroxyethyl)ethylenediamine N-oxide, N,N,N',N'-tetrakis(2-hydroxyethyl)ethylenediamine bis N-oxide, or mixtures thereof.

All features and embodiments described above also apply to this aspect.

The cementitious composition may in particular be a cementitious binder, a mortar, or concrete.

It is preferred that the cementitious composition comprises the at least one alkanolamine N-oxide in an amount of between 100 - 2000 ppm, preferably 200 - 800 ppm, especially 300 - 400 ppm, relative to the total weight of cementitious binder.

It is possible that the cementitious composition additionally comprises an alkanolamine. Preferably, where an additional alkanolamine is present, the cementitious composition comprises an alkanolamine N-oxide derived by oxidation from the alkanolamine present.

In another aspect, the present invention relates to the use of a modified cement obtained in a method as described above or of a cementitious composition as described above for the manufacture of shaped articles, especially the construction or repair of buildings.

For example, the modified cement or the cementitious composition may be used for a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, an anchoring mortar, ready-mix concrete, in-situ concrete, pumped concrete, spun concrete, tamped concrete, self-compacting concrete, mass concrete, roller-compacted concrete, slipform concrete, sprayed concrete, precast concrete, semi-dry concrete, underwater concrete, pervious concrete, aerated concrete, foam concrete, lightweight concrete, heavy weight concrete, colored concrete, repair concrete, high performance concrete, ultra-high performance concrete, limecrete, polymer concrete, prestressed concrete, vacuum concrete.

In a further aspect, the present invention relates to a shaped article obtainable by curing a cementitious composition as described above.

In a further aspect, the present invention relates to a method for the increase of strength at a given age of a cementitious composition, said method comprising a step of adding an admixture comprising an alkanolamine N-oxide to said cementitious composition.

All features and embodiments described above also apply to this aspect.

The cementitious composition may in particular be a cementitious binder, a mortar, or concrete.

In particular, the term "increase of strength at a given age" means that the strength, especially the compressive strength, of a cementitious composition comprising an admixture comprising alkanolamine N-oxide is higher after curing said composition for a given time, for example 1 day, 7 days, or 28 days. Curing starts when water is added to the cementitious composition. Comparison is made to the same cementitious composition cured for the same time, but not comprising an alkanolamine N-oxide. The compressive strength can be measured according to standard EN 196-1.

It is preferred to add the admixture comprising at least one alkanolamine N-oxide to said cementitious composition in an amount such that the cementitious composition comprises the at least one alkanolamine N-oxide in an amount of between 100 - 2000 ppm, preferably 200 - 800 ppm, especially 300 - 400 ppm, relative to the total weight of the cementitious binder present.

Preferably, the admixture is added to the cementitious composition together with or shortly after any mixing water.

### Examples

Throughout the examples the following abbreviations are used:
TEA: triethanolamine
TEAO: triethanolamine-N-oxide
TIPA: triisopropanolamine
TIPAO: triisopropanolamine-N-oxide
DEIPA: diethanolisopropanolamine
DEIPAO: diethanolisopropanolamine-N-oxide
MDEA: methyldiethanolamine
MDEAO: methyldiethanolamine-N-oxide
CS: compressive strength

### Preparation of alkanolamine N-oxide

150 g of alkanolamine are dissolved in 50 g of water. An equimolar amount of hydrogen peroxide (35 w% in water) is slowly added via a dropping funnel. The temperature of the mix was controlled to be below 60 °C during addition. After completion of addition of hydrogen peroxide, the mixture is stirred for 16 hours at 30 °C. Then a catalytic amount of MnO₂ powder is added to quench remaining peroxides. The completion of the reaction is confirmed with a peroxide test strip. The resulting reaction mixture is filtered. An aqueous solution of alkanolamine-N-oxide is obtained. ¹H-NMR analysis confirmed full conversion. The following table 1 shows an overview of alkanolamine N-oxides thus obtained.

### Preparation of mixtures of alkanolamine and corresponding alkanolamine N-oxide

150 g of alkanolamine are dissolved in 50 g of water. An amount of hydrogen peroxide (35 w% in water) as indicated in below table 1 is slowly added via a dropping funnel. The temperature of the mix was controlled to be below 60 °C during addition. After completion of addition of hydrogen peroxide, the mixture is stirred at 30 °C until testing with a peroxide test strip shows no peroxides anymore. The resulting aqueous solution is a solution of alkanolamine and the corresponding alkanolamine N-oxide in the molar amounts as indicated in below table 1, confirmed by ¹H-NMR analysis.

**Table 1: Additives produced**

| **Additive** | Alkanolamine | Alkanolamine N-oxide | H₂O₂ added* | ratio** | Solids content*** |
|---|---|---|---|---|---|
| **1** | TEA | TEAO | 1 | - | 57% |
| **2** | TIPA | TIPAO | 1 | - | 60% |
| **3** | DEIPA | DEIPAO | 1 | -. | 58% |
| **4** | MDEA | MDEAO | 1 | - | 54% |
| **5** | TEA | TEAO | 0.75 | 3:1 | 61% |
| **6** | DEIPA | DEIPAO | 0.85 | 5.7:1 | 60% |
| **7** | DEIPA | DEIPAO | 0.75 | 3:1 | 62% |
| **8** | DEIPA | DEIPAO | 0.5 | 1:1 | 65% |
| **9** | MDEA | MDEAO | 0.75 | 3:1 | 58% |
| **10** | MDEA | MDEAO | 0.5 | 1:1 | 63% |

| | | | | | |
|---|---|---|---|---|---|
| *mol H₂O₂ per mol alkanolamine **molar ratio of alkanolamine N-oxide : alkanolamine in aqueous solution *** concentration of alkanolamine and alkanolamine N-oxide in aqueous solution | | | | | |

### Example 1 - Mortar tests

Dry mortars were prepared by mixing 450 g of cement CEM I 42.5 R Lengfurt (from Heidelberg Materials) with mixing water, to yield a water to cement weight ratio of 0.5 and the paste was mixed for 30 seconds on a Hobart mixer at speed 1. The respective alkanolamines and/or alkanolamine N-oxides were added in the dosages (in ppm by weight of cement) as indicated in below tables 2 - 6 together with the mixing water. 1350 g of sand (0.08 - 2.0 mm according to standard EN 196-1) was then added over 30 seconds at speed 1 and mixing continued for another 30 seconds at speed 2. The mortar was allowed to rest for 90 seconds and finally mixed for 60 seconds at speed 2. The total wet mixing time therefore was 4 minutes in each case. A reference mortar was prepared in the same way without the addition of any alkanolamine N-oxide or alkanolamine.

Compressive strength (CS) was measured according to standard EN 196-1 on prisms of 40 x 40 x 160 mm after the time indicated in below tables 2-6.

In the following table 2 - 6 the compressive strength of all examples is given in % of the reference mortar. A value above 100 indicates an increase in strength versus the reference, a value below 100 indicates a decrease in strength versus the reference.

**Table 2:**

| **Example** | **1** | **2** | **3** | **4** | **5** | **6** |
|---|---|---|---|---|---|---|
| Additive | TEA | TEA | TEA | 1 | 1 | 1 |
| Dosage | 200 | 400 | 600 | 200 | 400 | 600 |
| CS (1d) | 106 | 99 | 104 | 101 | 109 | 104 |

It can be seen from the results of table 2 that TEAO increases the strength versus the reference and versus TEA especially at a dosage of 400 ppm.

**Table 3:**

| **Example** | **7** | **8** | **9** | **10** | **11** | **12** |
|---|---|---|---|---|---|---|
| Additive | TIPA | TIPA | TIPA | 2 | 2 | 2 |
| Dosage | 200 | 400 | 600 | 200 | 400 | 600 |
| CS (1d) | 99 | 99 | 104 | 102 | 110 | 106 |
| CS (7d) | 100 | 104 | 108 | 101 | 104 | 101 |
| CS (28d) | 98 | 106 | 108 | 107 | 108 | 104 |

It can be seen from the results of table 3 that TIPAO increases the strength versus the reference and also versus the use of TIPA at various ages.

**Table 4:**

| **Example** | **13** | **14** | **15** | **16** |
|---|---|---|---|---|
| Additive | DEIPA | DEIPA | 3 | 3 |
| Dosage | 400 | 600 | 400 | 600 |
| CS (1d) | 109 | 94 | 107 | 113 |
| CS (2d) | 97 | 87 | 103 | 107 |
| CS (28d) | 101 | 91 | 101 | 107 |

It can be seen from the results of table 4 that DEIPAO increases the strength versus the reference and also versus the use of DEIPA at various ages.

**Table5:**

| **Example** | **17** | **18** | **19** |
|---|---|---|---|
| Additive | 5 | 5 | 5 |
| Dosage | 100 | 250 | 500 |
| CS (1d) | 106 | 107 | 116 |
| CS (2d) | 102 | 100 | 104 |
| CS (28d) | 102 | 100 | 106 |

It can be seen from the results of table 5 that a mixture of TEA and TEAO (1:3 molar ratio) increases the strength versus the reference at all ages.

**Table 6:**

| **Example** | **20** | **21** | **22** |
|---|---|---|---|
| Additive | 6 | 6 | 6 |
| Dosage | 150 | 350 | 700 |
| CS (1d) | 109 | 115 | 113 |
| CS (2d) | 104 | 105 | 102 |
| CS (28d) | 97 | 106 | 102 |

It can be seen from the results of table 6 that a mixture of DEIPA and DEIPAO (1:5.7 molar ratio) increases the strength versus the reference at all ages.

### Example 2 - Mortar tests

Concrete was prepared by dry mixing 750 g of cement CEM II/A-LL 42.5 N (from Vigier), 141 g of limestone filler (Nekafill 15), 738 g of sand (0-1 mm), 1107 g of sand (1 - 4 mm), and 1154 g of gravel (4-8 mm) for 30 seconds. Then water was added in an amount to yield a water to cement weight ratio of 0.5. The respective alkanolamines and/or alkanolamine N-oxides were added in the dosages (in ppm by weight of cement) as indicated in below table 7 together with the mixing water. Mixing was continued for 3 minutes. A reference concrete was prepared in the same way without the addition of any alkanolamine N-oxide or alkanolamine.

Compressive strength (CS) was measured according to standard EN 196-1 on prisms of 40 x 40 x 160 mm after the time indicated in below table 7.

In the following table 7 the compressive strength of all examples is given in % of the reference concrete. A value above 100 indicates an increase in strength versus the reference, a value below 100 indicates a decrease in strength versus the reference.

**Table 7:**

| **Example** | **23** | **24** | **25** | **26** | **27** | **28** |
|---|---|---|---|---|---|---|
| Additive | TEA | 1 | TIPA | 2 | DEIPA | 3 |
| Dosage | 1000 | 1000 | 1000 | 1000 | 1000 | 1000 |
| CS (1d) | n.m. | n.m. | 98 | 122 | n.m. | n.m. |
| CS (2d) | n.m. | n.m. | 103 | 108 | n.m. | n.m. |
| CS (7d) | 97 | 104 | 110 | 114 | 102 | 104 |

| | | | | | | |
|---|---|---|---|---|---|---|
| n.m.: not measured | | | | | | |

### Example 3 - Mortar tests

Mortars were mixed in the same way as in example 1 with the only difference that a laboratory cement was used. The laboratory cement was prepared as follows: 9.5 kg of Ordinary Portland cement clinker and 0.5 kg of natural gypsum were dried and grinded in a ball mill (Siebtechnik TTS50, 80 kg of steel balls with 16 - 50 mm diameter) for 60 minutes at room temperature with 52 rpm. The respective alkanolamines and/or alkanolamine N-oxides were added in the dosages (in ppm by weight of cement) as indicated in below tables 8 and 9. A reference mortar was prepared in the same way without the addition of any alkanolamine N-oxide or alkanolamine.

Compressive strength (CS) was measured according to standard EN 196-1 on prisms of 40 x 40 x 160 mm after the time indicated in below tables 8 and 9.

In the following tables 8 and 9 the compressive strength of all examples is given in % of the reference concrete. A value above 100 indicates an increase in strength versus the reference, a value below 100 indicates a decrease in strength versus the reference.

**Table 8:**

| **Example** | **29** | **30** | **31** | **32** | **33** | **34** |
|---|---|---|---|---|---|---|
| Additive | DEIPA | DEIPA | 8 | 8 | 7 | 7 |
| Dosage | 100 | 300 | 100 | 300 | 100 | 300 |
| CS (1d) | 104 | 109 | 109 | 114 | 113 | 116 |
| CS (2d) | 104 | 104 | 107 | 111 | 105 | 108 |
| CS (7d) | 98 | 101 | 103 | 100 | 107 | 101 |
| CS (28d) | 104 | 109 | 109 | 114 | 113 | 116 |

**Table 9:**

| **Example** | **35** | **36** | **37** | **38** | **39** | **40** | **41** |
|---|---|---|---|---|---|---|---|
| Additive | MDEA | MDEA | 4 | 4 | 9 | 9 | 10 |
| Dosage | 100 | 300 | 100 | 300 | 100 | 300 | 300 |
| CS (1d) | 99 | 100 | 121 | 129 | 114 | 107 | 102 |
| CS (2d) | 90 | 97 | 112 | 112 | 107 | 101 | 100 |
| CS (28d) | 92 | 94 | 106 | 110 | 105 | 102 | n.m. |

| | | | | | | | |
|---|---|---|---|---|---|---|---|
| n.m.: not measured | | | | | | | |

## Claims

1. An admixture for cementitious compositions comprising at least one alkanolamine N-oxide.

2. The admixture as claimed in claim 1, **characterized in that** the alkanolamine N-oxide is selected from triethanolamine N-oxide, triisopropanolamine N-oxide, N-methyldiethanolamine N-oxide, N-methyldiisopropanolamine N-oxide diethanolisopropanolamine N-oxide, ethanoldiisopronanolamine N-oxide, N,N,N',N'-tetrakis(2-hydroxyethyl)ethylenediamine N-oxide, N,N,N',N'-tetrakis(2-hydroxyethyl)ethylenediamine bis N-oxide, or mixtures thereof.

3. The admixture as claimed in at least one of the preceding claims, **characterized in that** it additionally comprises at least one alkanolamine.

4. The admixture as claimed in claim 3, **characterized in that** the alkanolamine N-oxide present is derived by oxidation from the alkanolamine present.

5. The admixture as claimed in at least one of the claims 3 or 4, **characterized in that** a molar ratio of the alkanolamine N-oxide to the alkanolamine is between 10:1 to 1:10, preferably 6:1 to 1:3, more preferably 3:1 to 1:1.

6. The admixture as claimed in at least one of the preceding claims, **characterized in that** it additionally comprises at least one of solvents, especially water, retarders, accelerators, air detraining agents, defoamers, air entraining agents, shrinkage reducing admixtures, water reducers, superplasticizers, viscosity modifiers, thickening agents, foaming agents, water retention agents, damp proofing agents, pumping aids, biocides, corrosion inhibitors, grinding aids, especially glycols or glycerol, and pigments.

7. A method for the manufacture of a cementitious composition, said method comprising the steps of
(i) providing at least one constituent of a cementitious composition,
(ii) providing an admixture comprising at least one alkanolamine N-oxide,
(iii) adding said admixture to said at least one constituent of a cementitious composition.

8. The method as claimed in claim 7, **characterized in that** in step (iii) the admixture is added to the at least one constituent of a cementitious composition together with any mixing water.

9. A method for the modification of cement, in particular Portland cement, comprising the steps of
(i) providing a constituent of cement, preferably providing Portland cement clinker,
(ii) providing an admixture comprising at least one alkanolamine N-oxide,
(iii) intergrinding said admixture with said constituent of cement.

10. A cementitious composition comprising
a) at least one cementitious binder, preferably Portland cement,
b) at least one alkanolamine N-oxide, preferably selected from triethanolamine N-oxide, triisopropanolamine N-oxide, N-methyldiethanolamine N-oxide, N-methyldiisopropanolamine N-oxide diethanolisopropanolamine N-oxide, ethanoldiisopronanolamine N-oxide, N,N,N',N'-tetrakis(2-hydroxyethyl)ethylenediamine N-oxide, N,N,N',N'-tetrakis(2-hydroxyethyl)ethylenediamine bis N-oxide, or mixtures thereof.

11. The cementitious composition as claimed in claim 10, **characterized in that** it comprises the at least one alkanolamine N-oxide in an amount of between 100 - 2000 ppm, preferably 200 - 800 ppm, especially 300 - 400 ppm, relative to the total weight of cementitious binder.

12. The cementitious composition as claimed in at least one of claims 10 - 11, **characterized in that** it additionally comprises an alkanolamine, preferably it comprises an alkanolamine N-oxide derived by oxidation from the additionally present alkanolamine.

13. The use of a modified cement obtained in a method as claimed in claim 9 or of a cementitious composition as claimed in at least one of claims 10 - 12 for the manufacture of shaped articles, especially the construction or repair of buildings.

14. A shaped article obtainable by curing a cementitious composition as claimed in at least one of claims 10 - 12.

15. A method for the increase of strength at a given age of a cementitious composition, said method comprising a step of adding an admixture comprising an alkanolamine N-oxide to said cementitious composition.
